# EUROPÄISCHE PATENTSCHRIFT

(11) **EP 4 336 140 B1**
(45) Veröffentlichungstag und Bekanntmachung des Hinweises auf die Patenterteilung: **17.06.2026**
(21) Anmeldenummer: 22195050.4
(22) Anmeldetag: 12.09.2022
(51) Int. Cl.: G01B 9/02017, G01B 9/0209, G01B 11/12, G01B 11/24, G01B 11/30, G01N 21/954

(54) **VERFAHREN ZUR BEURTEILUNG DES ERGEBNISSES EINER AN EINEM WERKSTÜCK DURCHGEFÜHRTEN BOHRUNG**
METHOD FOR EVALUATING THE RESULT OF A HOLE PERFORMED ON A WORKPIECE
PROCÉDÉ D'ÉVALUATION DU RÉSULTAT D'UN FORAGE EFFECTUÉ SUR UNE PIÈCE

(43) Veröffentlichungstag der Anmeldung: 13.03.2024
(73) Patentinhaber: 3D.aero GmbH, 20539 Hamburg (DE)
(72) Erfinder: Neddermeyer, Werner, L-6496 Echternach (LU); Harms, Tim, 21147 Hamburg (DE); Bahr, Sönke, 64297 Darmstadt (DE); Flüh, Tobias, 24407 Rabenkirchen-Faulück (DE); Domaschke, Tomas, 22043 Hamburg (DE)
(74) Vertreter: Raffay & Fleck

(56) Entgegenhaltungen:
- DE-A1- 10 204 136
- DE-A1- 10 301 607
- DE-A1- 102004 045 808
- DE-A1- 102013 003 640
- DE-B4- 112014 006 706
- US-A1- 2012 140 243

## Beschreibung

Die vorliegende Erfindung betrifft Verfahren zur Beurteilung einer Wandung einer Vertiefung in einem Werkstück. Dies findet beispielsweise Anwendung in der Luftfahrt- und/oder Automobilindustrie. Insbesondere betrifft die Erfindung ein Verfahren zur automatischen Prüfung von Bohrungen.

Die bisherigen etablierten Verfahren sind aufgrund ihrer geringen Genauigkeit, Flexibilität, Robustheit und mangelnden Wiederholbarkeit nicht zufriedenstellend.

So gibt es im Stand der Technik bereits verschiedene Ansätze, die Güte einer durchgeführten Bohrung von Werkstückoberflächen zu bestimmen. Eines der am weitesten verbreiteten Verfahren ist dabei nach wie vor die visuelle Prüfung mittels Lupe oder Taschenmikroskop. Übliche Vergrößerungen liegen im Bereich 10-fach bis 30-fach. Hierbei schätzt ein Werker die Güte der Bohrung anhand seiner Erfahrung und im Vergleich zu Referenzproben ab.

Bisher wird die Einhaltung des korrekten Durchmesser-Toleranzbereiches der Bohrungen meist manuell mit einem Grenzlehrdorn sichergestellt. Auch bei mehrschichtigen Materialien kommt lediglich ein Grenzlehrdorn zum Einsatz. Zur Bestimmung der Oberflächenrauheit kommt häufig ein mobiles, handgeführtes Rauheitsmessgerät zum Einsatz. Damit wird an einer beliebigen Stelle in der Bohrung eine Messung längs zur Bohrungsachse durchgeführt. Für den Fall, dass die Messung entlang eines größeren Kratzers verläuft, der das Messergebnis stark verfälschen kann, werden mehrere Messungen an verschiedenen Positionen durchgeführt. In diesem Fall folgt eine Sichtprüfung mittels Lupe, um die Ursache für die Abweichung auszumachen und die Qualität der Bohrung durch einen Blick ins Innere zu bewerten. Auf Grundlage dieses teils subjektiv behafteten Vorgehens wird schließlich darüber entschieden, ob das Bauteil verwendet oder als Ausschuss deklariert wird. Dieses Vorgehen ist jedoch kaum bis gar nicht wiederholbar.

Vereinzelt kommen bereits auch optische Messysteme mit rotierender Messsonde zum Einsatz, die in die Bohrung eingetaucht werden. Damit lassen sich dreidimensionale Abbildungen (Punktewolken) der Bohrungswandung erzeugen. Diese Systeme messen alle den einseitigen Abstand der Bohrungswand zur Lanze (Punktmessung), während diese kontinuierlich rotiert und entlang der Bohrungsachse verfahren wird. Das Ergebnis ist eine spiralförmige dreidimensionale Punktewolke, anhand der die gewünschten Eigenschaften im Nachgang untersucht werden. Diese Systeme liefern die Ergebnisse jedoch nicht mit der notwendigen Genauigkeit und Stabilität. Außerdem sind diese Systeme nicht für den mobilen Einsatz konzipiert.

Ein solches System mit rotierender und einseitig messender Lanze ist beispielsweise bekannt aus WO 2005/121700 A1 bzw. ist das boreCONTROL der Fa. Micro-Epsilon mit zusätzlicher externer Linearachse, welches mittels eines konfokal-chromatischen Messstrahls Bohrungen berührungslos abtastet. Ein weiteres Beispiel-System mit rotierender und einseitig messender Lanze ist das BOREIN-SPECT System der Fa. Novacam. Dieses verwendet das Prinzip der kurzkohärenten Interferometrie zur berührungslosen Abtastung von Bohrungsinnenwänden. Aus der US 8,194,251 B2 ist zudem ein CPS-Verfahren mit einer Lanze, die zwei chromatische Punktentfernungsmessungen gleichzeitig diametral gegenüberliegend ermöglicht, bekannt. Dabei liegen die Messungen in unterschiedlichen Ebenen senkrecht zur Lanze.

Aus der DE 102004045808 A1 ist eine optische Messvorrichtung zur Vermessung von mehreren Flächen eines Messobjektes bekannt.

Aus der US 2015/0159998 A1 ist zudem ein CPS-Verfahren mit einer Lanze, die drei chromatische Punktentfernungsmessungen in einer Ebene ermöglicht, bekannt.

Bisherige Verfahren zur automatisierten Prüfung bedienen sich meist linienweiser oder spiralförmiger Messungen von Einzelpunkten der Oberfläche. Die Vermessung von nur wenigen Punkten zeitgleich stellt, für die vollständige Vermessung einer Wandung sehr hohe Anforderungen an die Genauigkeit der Bewegung der Lanze. Die aus einer Vielzahl von Rotations- und Translationsschritten gewonnen Werte, liefern nur ein ungenaues Gesamtbild. Zudem können Durchmesser oder Abstände zwischen zwei Wänden nur indirekt und somit ungenau bestimmt werden. Rauheitsmessungen lassen sie aus diesen Gründen meist nicht zu.

Die Verwendung eines Grenzlehrdorns ermöglicht lediglich die Überprüfung, ob die Bohrung im vorgegebenen Toleranzbereich liegt. Diese Aussage kann zudem auch nur für das Bohrloch als Ganzes getroffen werden. Eine Unterscheidung verschiedener Schichten ist nicht möglich.

Bei der Rauheitsmessung mittels eines handgeführten, taktilen Messgeräts ist kaum sicherzustellen, dass sich die Messstrecke gezielt auf bestimmte Bereiche oder einzelne Materialschichten beschränkt. Erstreckt sich die Messstrecke über verschiedene Schichten, deren Oberflächen durch den Bohrprozess unterschiedlich ausgeprägt sind, ist das Messergebnis nicht aussagekräftig. Die Genauigkeit der Ergebnisse des handgeführten Messgerätes kann zudem von individuellen Faktoren, wie beispielsweise der Erfahrung bei der Handhabung des Gerätes, beeinflusst werden. Kommt es abschließend zu einer Sichtprüfung, so kann auch diese Entscheidung subjektiv behaftet ausfallen. Zudem wird die visuelle Inspektion dadurch stark erschwert, dass beispielsweise mit einer Lupe von außen in die Bohrung hineingeschaut werden muss. Schmale und tiefere Bohrungen auf diese Art und Weise über die gesamte Tiefe vollflächig und wiederholbar genau zu inspizieren, ist nicht möglich. Weiterhin ist so auch eine Dokumentation der Eigenschaften und möglicher Mängel nicht zufriedenstellend möglich.

Auch die Systeme mit einseitig messender und rotierender Sensorlanze besitzen einen entscheiden Nachteil. Durch Fertigungstoleranzen, Umgebungseinflüsse und die Benutzung ist ein idealer Rundlauf einer solchen Lanze nicht gewährleistet. Daraus ergibt sich die Problematik dieser einseitig messenden Systeme. Das Taumeln und die Verkippung der Lanze in einer Bohrung beeinflusst den Abstand der Messoptik zur Bohrungswand. Diese ungewollte Abweichung geht direkt in das Messergebnis ein und verfälscht dieses. Da sich diese Abweichung aufgrund der einseitigen Punktmessung nicht quantifizieren lässt, lässt sich auch der Fehler, der durch das Taumeln der Achse in die Abstandsmessung eingeht, nicht ermitteln. Damit ist eine genaue Messung des Durchmessers nicht möglich.

Hierzu schlägt die Erfindung ein Verfahren und eine Vorrichtung, sowie vorteilhafte Weiterbildungen vor.

Das erfindungsgemäße Verfahren zur Untersuchung und/oder Vermessung mindestens eines Wandabschnitts einer in einem Werkstück eingebrachten Vertiefung, insbesondere Senkung und/oder Bohrung, mittels eines optischen Messverfahrens, fordert das Einbringen mindestens eines Lichtstrahls entlang einer ersten Achse in die Vertiefung, wobei mittels des mindestens einen Lichtstrahls die Geometrie und/oder Reflexivität des mindestens einen Wandabschnitts vermessen wird, wobei der mindestens eine Lichtstrahl in der Vertiefung so umgelenkt wird, dass jeweils zeitgleich mindestens zwei, in der Vertiefung diametral gegenüberliegende Bereiche des mindestens einen Wandabschnitts beleuchtet werden und dass durch die mindestens zwei Bereiche jeweils reflektiertes Licht entlang der ersten Achse aus der Vertiefung heraus geleitet und außerhalb der Vertiefung zur Bestimmung der Geometrie und/oder Reflexivität des mindestens einen Wandabschnitts verwendet wird, wobei in jedem Bereich für mindestens 1000 Pixel, insbesondere zeitgleich, mindestens ein Entfernungswert und/oder mindestens ein Intensitäts- und/oder Reflexivitätswert erfasst wird, wobei die Pixel eine 2- oder 3-dimensionale Anordnung aufweisen.

Die erfindungsgemäße Vorrichtung zur Untersuchung und/oder Vermessung mindestens eines Wandabschnitts einer in einem Werkstück eingebrachten Vertiefung, insbesondere Senkung und/oder Bohrung, mittels eines optischen Messverfahrens, ist eingerichtet mindestens einen Lichtstrahl durch eine Lanze, insbesondere von einem ersten Abschnitts der Lanze aus und/oder entlang der Längserstreckung der Lanze, in die Vertiefung einzubringen, wobei die Vorrichtung eingerichtet ist, mittels des mindestens eines Lichtstrahl die Geometrie und/oder Reflexivität des mindestens einen Wandabschnitts zu vermessen, wobei die Vorrichtung eingerichtet ist, die Lanze um die Längserstreckung der Lanze zu rotieren und/oder die Lanze entlang der Längserstreckung der Lanze zu verfahren, wobei die Lanze, insbesondere beabstandet vom ersten Abschnitt, mindestens einen Strahlteiler aufweist, der angeordnet und eingerichtet ist, den mindestens einen Lichtstrahl so umzulenken, dass er in einer Mehrzahl benachbarter und zur Längserstreckung der Lanze senkrechter Ebenen an mindestens zwei voneinander beabstandeten, diametral gegenüberliegenden Umfangsbereichen der Lanze, insbesondere radial, aus der Lanze austritt und dass die Vorrichtung eingerichtet ist, jeweils an den mindestens zwei Bereichen ausgetretenes und zurück reflektiertes Licht durch die Lanze, insbesondere zum ersten Abschnitt und/oder entlang der Längserstreckung der Lanze, und aus der Lanze heraus zu leiten und außerhalb der Lanze zur Bestimmung der Geometrie und/oder Reflexivität des mindestens einen Wandabschnitts zu verwenden, wobei
die Vorrichtung eingerichtet ist, über jeden der mindestens zwei Umfangsbereiche für mindestens 1000 Pixel je mindestens ein Entfernungswerte und/oder mindestens ein Intensitäts- und/oder Reflexivitätswert, insbesondere zeitgleich, zu erfassen, wobei die Pixel eine 2- oder 3-dimensionale Anordnung aufweisen.

Gelöst wir die Aufgabe auch durch eine nicht als solche beanspruchte Verwendung eines Strahlteilers, insbesondere Reflexionsstrahlteilers, insbesondere Anordnung mindestens zweier Spiegel, zur Untersuchung und/oder Vermessung mindestens eines Wandabschnitts einer in einem Werkstück eingebrachten Vertiefung, insbesondere Senkung und/oder Bohrung, mittels eines optischen, insbesondere interferometrischen, Messverfahrens, wobei der Strahlteiler eingerichtet ist, einen einfallenden Lichtstrahl in mindestens zwei Strahlen zu teilen, die insbesondere einen Winkel von 180° einschließen und jeweils, insbesondere unmittelbar nach dem Strahlteiler, mindestens 1 mm² Querschnittsfläche aufweisen.

Insbesondere ist die Vorrichtung zur Durchführung des Verfahrens und/oder der Verwendung ausgebildet und/oder wird das Verfahren und/oder die Verwendung mit der Vorrichtung durchgeführt. Auch ist die Vorrichtung bevorzugt nachfolgend verfahrensmäßig beschriebene Ausgestaltungen auszuführen.

Der mindestens eine Wandabschnitt kann insbesondere ein einziger zusammenhängender Wandabschnitt sein. Dieser kann insbesondere durch eine Vielzahl von Bereichen abgedeckt bzw. gebildet werden, die aneinander angrenzen und insbesondere überlappend aneinander angrenzen.

Dadurch kann ein ganzheitliches Bild der Wandung gewonnen werden. Es können aber auch mehrere voneinander getrennte Wandabschnitte, beispielsweise zwei diametral gegenüberliegende Streifen erfasst werden. Dies kann besonders bevorzugt sein, wenn eine einfach Verfahrensführung gewünscht ist, beispielswiese ohne Rotation der ersten Achse bzw. Lanze.

Bevorzugt wird die Verwendung eines einzigen Lichtstrahls, insbesondere eines Interferometers, insbesondere Weißlichtinterferometers. Dieser kann aber auch schon beim Verlauf entlang der ersten Achse aufgeteilt sein bzw. werden. Auch können mehrere Lichtstrahlen, insbesondere entlang der ersten Achse parallel verlaufende Lichtstrahlen verwendet werden.

Der mindestens eine Lichtstrahl verläuft insbesondere so, dass er die erste Achse mittig einschließt, aber in jedem Fall bevorzugt parallel zur ersten Achse. Er läuft bevorzugt innerhalb einer hohl ausgebildeten Lanze, also insbesondere in einem Rohr. Er verläuft insbesondere über eine Länge im Bereich von 10 bis 500 mm, insbesondere von maximal 300 mm, entlang der Achse bzw. in der Lanze.

Mit besonderem Vorteil liegen die Bereiche erfindungsgemäß diametral gegenüber bzw. verläuft mindestens eine Verbindungslinie zwischen zwei zeitgleich beleuchteten Bereichen durch die erste Achse, die Längsachse der Lanze und/oder die Mittelachse der Vertiefung. So können beispielsweise zwei diametral angeordnete Bereiche verwendet werden. Aber auch die Verwendung mehrerer Bereiche oder geteilter Lichtstrahlen ist möglich. Dabei werden diese insbesondere so angeordnet, dass eine Verbindungslinie zwischen zwei zeitgleich beleuchteten Bereichen und/oder der Austrittsflächen der Lichtstrahlen aus der Lanze durch die erste Achse, die Längsachse der Lanze und/oder die Mittelachse der Vertiefung verläuft, wobei die Verbindungslinie insbesondere so gewählt ist, dass Licht auch entlang der in beide Richtungen verlängerten Linie aus der Lanze austritt.

Das reflektierte Licht, insbesondere der Anteil des an der Wandung reflektierten Lichts, der, insbesondere parallel zum austretenden Licht, wieder zum Strahlteiler zurückgeworfen wird, wird entlang der ersten Achse bzw. in der Lanze wieder geleitet und einer Auswerteinheit zugeleitet. Die Vorrichtung ist dazu insbesondere eingerichtet.

Anhand des reflektierten entlang der ersten Achse geleiteten Lichts kann die Geometrie der Wandung und/oder deren Reflexivität bestimmt werden. Dies erfolgt insbesondere interferometrisch. Dies bietet den Vorteil, eine flächige und nicht nur punktförmige Untersuchung zu bei einer bestimmten Stellung des Strahlteilers bzw. der Lanze zu ermögliche und Reflexivität und Geometrie in einem Messverfahren zu bestimmen. So kann der reflektierte Strahl mit einem Referenzstrahl überlagert werden und mit einem lichtempfindlichen Sensorarray nach dem Durchlaufen unterschiedlicher Weglängen aufgenommen werden. Dazu kann beispielsweise das Sensorarray oder ein Spiegel verfahrbar ausgestaltet sein, um unterschiedliche Weglängen zu realisieren. Auf dem Sensorarray ergibt sich dann für jedes Pixel des Sensorarrays eine von der Weglänge abhängige Intensitätsverteilung. Aus der Lage des Maximums des Intensitätspeaks kann die Geometrie der Wandung und anhand der Intensität des Maximums die Reflexivität bestimmt werden. Dazu kann beispielsweise ein Sensor mit einer schachbrettartigen Anordnung von Pixeln verwendet werden. Wird von den mindestens zwei Bereichen reflektiertes Licht auf das Sensorarray abgebildet und für jedes Pixel das Maximum der Intensität bestimmt, so kann ohne Veränderung der Bereiche oder des Strahlteilers bzw. der Lanze ein flächiger Bereich bzgl. der Geometire und oder Reflexivität vermessen werden.

Insbesondere werden pro zeitgliche erfasster/beleuchteter Bereiche mindestens 200 und/oder maximal 1000 Werte pro Pixel für jeweils unterschiedliche Weglängen ausgelesen und insbesondere die Weglänge mit maximaler Beleuchtungsintensität des Pixels und/oder die maximale Beleuchtungsintensität des Pixels bestimmt.

Mit Vorteil kann eine Kalibrierung mittels einer Vertiefung mit bekannter Geometrie oder mittels eines bekannten Messtrecke, beispielsweise zwischen zwei parallelen Wänden mit bekanntem Abstand und/oder ein einer Referenzbohrung mit bekanntem Durchmesser erfolgen.

Die Verwendung von Weißlicht in der Interferometrie ist besonders vorteilhaft, da dadurch eine besonders genaue Bestimmung der Maxima möglich ist.

Mit Vorteil werden in jedem Bereich mindestens 25 Pixel aufgenommen, also für mindestens 25 Pixel jeweils das Maximum der Intensität bzgl. der dafür erforderlichen Weglänge und/oder der Amplitude bzw. ein Entfernungs- und/oder ein Intensitäts- oder Reflexivitätswert bestimmt. Dadurch lässt sich die lokale Geometrie zu einem gewissen Grad erfassen, der es ermöglicht, den Abstand der gegenüberliegenden Wandungen zu bestimmen und/oder eine ausreichende Überlappung aufweist, um eine zusammenhängende Abbildung durch mehrere Bereiche zu gewinnen. Deutlich höhere Pixelanzahlen von erfindungsgemäß mindestens 1000 sind aber zu bevorzugen für eine schnelle und detailreiche wie genaue Untersuchung.

Insbesondere sind die Pixel über den Bereich oder seine Projektion auf eine Ebene, in der die erste Achse liegt, gleichmäßig verteilt.

Mit Vorteil werden in jedem Bereich mindestens 0,1 mm² aufgenommen und/oder beleuchtet und/oder weist jeder der aus der Lanze austretenden Lichtstrahlen mindestens 0,1 mm² Querschnittsfläche auf. Dadurch lässt sich die lokale Geometrie zu einem gewissen Grad erfassen, der es ermöglicht, den Abstand der gegenüberliegenden Wandungen zu bestimmen und/oder eine ausreichende Überlappung aufweist, um eine zusammenhängende Abbildung durch mehrere Bereiche zu gewinnen. Deutlich größere Flächen von mindestens 1 mm² sind aber zu bevorzugen für eine schnelle wie genaue Untersuchung.

Besonders bevorzugt weisen die den Pixeln jeweils auf der Wandung oder im Lichtstrahl beim Durchtreten des Lanzenumfangs entsprechende Punkte einen Abstand im Bereich von 1 bis 500 *µ*m, insbesondere im Bereich von 10 bis 50*µ*m auf. Dies kann durch Einsatz entsprechender Optiken realisiert werden.

Mit Vorteil werden die Bereiche gemeinsam um die erste Achse bzw. Lanzenlängserstreckung rotiert und entlang der ersten Achse bzw. Lanzenlängsrichtung verfahren. Dabei wird das Verfahren zunächst für eine erste mindestens zwei Bereiche umfassende Bereichsmenge durchgeführt, dann eine Rotation und/oder, insbesondere exklusiv oder, Translation vorgenommen und anschließend das Verfahren für eine zweite mindestens zwei Bereiche umfassende Bereichsmenge durchgeführt usw. bis das Verfahren für eine Vielzahl, insbesondere mindestens sechs, von Bereichsmengen durchgeführt wurde. Die Vorrichtung ist vorteilhaft für eine solche Durchführung eingerichtet. Dabei sind die Bereiche der Bereichsmengen so gewählt, dass jeweils ein Bereich einer Bereichsmenge mit einem Bereich einer, insbesondere unmittelbar, nachfolgenden Bereichsmenge eine Überlappung aufweist. Insbesondere sind die Bereichsmengen so gewählt, so dass alle Bereiche abgesehen von den randständigen Grenzen der Menge aller Bereichsmengen an allen Seiten Überlappungen mit jeweils mindestens einem Bereich der Vielzahl der Bereichsmengen aufweisen. So kann eine flächige und unterbrechungsfreie Gesamtabbildung des durch die Bereiche abgedeckten Wandabschnitts erreicht werden.

Bevorzugt weisen die Bereiche je eine Fläche im Bereich von mindestens 2 mm² und/oder bis maximal 50 mm², insbesondere im Bereich von 3 bis 10 mm² auf.

Dies hat sich für eine besonders effiziente wie genaue Verfahrensführung als vorteilhaft gezeigt.

Mit Vorteil erfolgt die Bestimmung der Entfernungswerte und/oder Intensitäts- und/oder Reflexivitätswerte der gleichzeitig beleuchteten Bereiche, also insbesondere der Pixel, auf die die gleichzeitig beleuchteten Bereiche abgebildet werden, ohne Verfahrung oder Rotation der ersten Achse bzw. der Lanze und/oder ohne Veränderung der Beleuchtung des mindestens einen Wandabschnitts. Dadurch lässt sich eine besonders hohe Genauigkeit erreichen.

Bevorzugt schneiden die jeweils gelichzeitig beleuchteten Bereiche jeweils eine gemeinsame Ebene senkrecht zur ersten Achse, insbesondere schneiden sie die selben Ebenen senkrecht zur ersten Achse. Dadurch, also insbesondere dadurch, dass die Bereiche bzw. Austrittsflächen der Lichtstrahlen aus der Lanze auf gleichen Bereichen der Längserstreckung der Lanze liegen oder die selben Ebenen senkrecht zur ersten Achse schneiden, ist eine besonders genaue Vermessung, beispielsweise des Durchmessers eine Bohrung möglich, insbesondere wenn die erste Achse und/oder Längserstreckung der Lanze parallel, aber nicht zwingend entlang, der Längserstreckung des Bohrung angeordnet ist. Eine solche Anordnung kann auch auf Grund der Vermessung mittels des Verfahrens erreicht werden. So kann zunächst eine Mehrzahl von Bereichen in unterschiedlicher Tiefe des Lochs vermessen und anhand derer eine Verkippung der ersten Achse bzw. der Lanze zur Längsachse des Lochs bestimmt werden und ggf. die Lage der ersten Achse bzw. Lanze entsprechend korrigiert werden.

Mit Vorteil weist der der mindestens eine Wandabschnitt eine Größe im Bereich von mindestens 25 mm² und/oder maximal 100 cm² auf. Dadurch lässt sich eine belastbare und von lokalen Abweichungen abstrahierende Beurteilung einer Vertiefung, insbesondere gebohrt und/oder gefräst, erreichen.

Bevorzugt weist die Vertiefung eine Größe und/oder einen Durchmesser im Bereich von 4 bis 25 mm und/oder weist die Vertiefung und/oder der mindestens eine Wandabschnitt eine Tiefe, insbesondere in Richtung der ersten Achse und/oder der Längserstreckung der Lanze im Bereich von mindestens 2 mm und/oder maximal 0,5 m auf. Dadurch lässt sich eine belastbare und von lokalen Abweichungen abstrahierende Beurteilung einer Vertiefung, insbesondere gebohrt und/oder gefräst, erreichen.

Mit Vorteil wird das Verfahren so durchgeführt, dass pro Bereich mindestens 1000 Pixel zeitgleich und/oder maximal 50000 Pixel, insbesondere zeitgleich, erfasst werden, wobei die Pixel über den Bereich oder seine Projektion auf eine Ebene, in der die erste Achse liegt, gleichmäßig verteilt sind.

Verfahren nach einem der vorstehenden Ansprüche, wobei aus der Reflexivität eine Materialart, -rauigkeit und/oder -farbe abgeleitet und/oder auf Basis von unterschiedlichen Reflexivitätswerten mindestens ein Materialart- und/oder -farbunterschied und/oder mindestens eine -grenze erkannt wird.

Bevorzugt überlappen, insbesondere alle aneinander angrenzenden, Bereiche, insbesondere um mindestens 20 Pixel, insbesondere an jede Kante zu einem angrenzenden Bereich hin. Besonders bevorzugt wird es, wenn die Intensitäts- und/oder Reflexivitätsabbildungen der überlappenden Bereiche zu einer zusammenhängenden Reflexivitätsabbildung zusammengesetzt werden und/oder die Geometrien der überlappenden Bereich zu einer zusammenhängenden Geometrie zusammen gesetzt werden.

Erfindungsgemäß sind die jeweils zeitgleich beleuchteten Bereiche des mindestens einen Wandabschnitts untereinander disjunkt. Vorteilhafterweise weisen sie einen Abstand von mindestens ein Drittel des Umfangs der Wandung und/oder der Erstreckung der Wandung in der Ebene senkrecht zur ersten Achse/Lanzenlängserstreckung auf.

Besonders bevorzugt erfolgt die Umlenkung durch einen Strahlteiler, insbesondere gebildet durch mindestens zwei Spiegel, und/oder wird mittels eines Strahlteilers durch die mindestens zwei Bereiche reflektiertes Licht entlang der ersten Achse aus der Vertiefung heraus geleitet.

Als Strahlteiler kann beispielsweise eine satteldachförmige Anordnung zweier Spiegel verwendet werden. Diese können beispielsweise durch reflektierende Beschichtung eines entsprechend geformten Glaskörpers, insbesondere eines im Querschnitt, insbesondere allen Querschnitten gleich, dreieckigen Glaskörpers, der insbesondere als Vollkörper ohne Hohlraum ausgebildet ist, gebildet werden. Dies hat sich als besonders robust herausgestellt. Dabei trifft der entlang der ersten Achse oder in der Lanze verlaufende Lichtstrahl von oben beispielswiese auf den First und die spiegelnden Flächen, insbesondere symmetrisch, und wird geteilt und umgelenkt. Der Strahlteiler ist insbesondere reflektierend ausgebildet.

Der Strahlteiler kann bevorzugt eine Mehrzahl, insbesondere eine Mehrzahl von zwei bis acht, ebener spiegelnder Flächen aufweisen, die insbesondere zueinander jeweils einen Winkel aufweisen und/oder jeweils eine zusammenhängende ebene Fläche aufwiesen. Insbesondere ist pro Bereich und/oder pro Umfangsbereich, an dem eine Strahl aus der Lanze austritt, eine ebene spiegelnde Fläche vorgesehen. Dabei ist der Strahlteiler insbesondere durch mindestens einen, insbesondere genau einen, Glasköper mit spiegelnd beschichteten Oberflächen gebildet.

Der Strahlteiler kann aber auch transmittierend und/oder refraktiv ausgebildet sein. Der Strahlteiler kann auch als Strahlteilerfeld ausgebildet sein, also durch eine Vielzahl von Elementen gebildet sein, die in der Summe zu einer entsprechenden Teilung und Umlenkung führen.

Mit Vorteil wird der entlang der ersten Achse/Lanzenlängserstreckung verfahren und/oder um die erste Achse/ Lanzenlängserstreckung rotiert wird und werden dadurch unterschiedliche Bereiche in der Vertiefung durch den mindestens einen Lichtstrahl beleuchtet.

Besonders vorteilhaft wird der Strahlteiler entlang der ersten Achse/Lanzenlängserstreckung in die Vertiefung eingebracht, insbesondere translativ.

Verfahren nach einem der vorstehenden Ansprüche, wobei basierend auf der bestimmten Geometrie des mindestens einen Wandabschnitts eine Zentrierung der ersten Achse/Lanzenlängserstreckung in der Vertiefung bewirkt wird, insbesondere mittels einer Verfahr- und/oder Verkippungsvorrichtung zur Verfahrung und/oder Verkippung der ersten Achse/Lanze in einer Ebene senkrecht zur ersten Achse/Lanzenlängserstreckung und/oder Verkippung der ersten Achse/Lanze.

Mit besonderem Vorteil wird die Lage und/oder Orientierung der ersten Achse und/oder des mindestens eines Bereichs, einer Lanze, an der der Strahlteiler festgelegt ist, und/oder des Strahlteilers, insbesondere relativ zum Werkstück, erfasst. Dadurch lassen sie die gewonnen Messwerte in Beziehung zum Werkstück bringen und auch die Lage und Orientierung der der Vertiefung prüfen.

Vorteilhafterweise wird bei einem hier vorgeschlagenen Verfahren, mittels eines optischen Messverfahrens, die Geometrie der Wandung ortsaufgelöst aufgenommen. Dies geschieht idealerweise mit einer hohen Auflösung. Insbesondere sollte die Auflösung so gewählt werden, dass die laterale Auflösung und/oder die Auflösung parallel zu einer Ebene, in der die erste Achse und/oder die Längserstreckung der Lanze liegt, besser ist als 50 *µ*m, insbesondere besser ist als 25*µ*m, insbesondere im Bereich von 5*µ*m bis 15*µ*m, liegt.

Insbesondere sollte die Auflösung so gewählt werden, dass die Auflösung senkrecht zur ersten Achse und/oder Längserstreckung der Lanze und/oder die Auflösung parallel zu einer Ebene, in der die erste Achse und/oder Lanze liegt, besser ist als 75 *µ*m, insbesondere besser ist als 50*µ*m, insbesondere im Bereich von 10*µ*m bis 50*µ*m, liegt.

Derartige Auflösungen lassen sich beispielweise mittels Interferometrie, insbesondere WLI, und entsprechende Optiken realisieren.

Weiterhin kann die erfasste Geometrie und/oder Reflexivität mit einer für die Vertiefung erwarteten Sollgeometrie und/oder Sollreflexivität verglichen und eine Abweichung ermittelt werden. Die erwartete Sollgeometrie und/oder Sollreflexivität kann dabei z.B. insbesondere aus einem Konstruktionsmodell des Werkstücks und insbesondere den Materialeigenschaften, abgeleitet werden.

Die vorstehend beschriebene Auswertung erfolgt typischerweise rechnergestützt, unter Nutzung einer die Auswertung vollziehenden Software. Diese kann die Auswertungsergebnisse dann insbesondere auch, ggf. zusammen mit den Rohdaten, z.B. der erfassten Geometrie, dem Werkstück zugeordnet archivieren, gleichermaßen als eine Art Qualitätspass.

Mögliche Ausgestaltungen des erfindungsgemäßen Verfahrens sollen im Folgenden rein exemplarisch anhand der nachfolgenden rein schematischen Figuren erläutert werden. Dabei zeigen:
- Fig. 1: einen Querschnitt durch eine Lanze in einer Bohrung
- Fig. 2: die Aufnahme der Geometrie zweier diametral gegenüberliegender Bereiche und
- Fig. 3: eine Darstellung der aus einer Vielzahl von überlappenden Bereichen gewonnen Geometrie einer Bohrung mit Senkung.

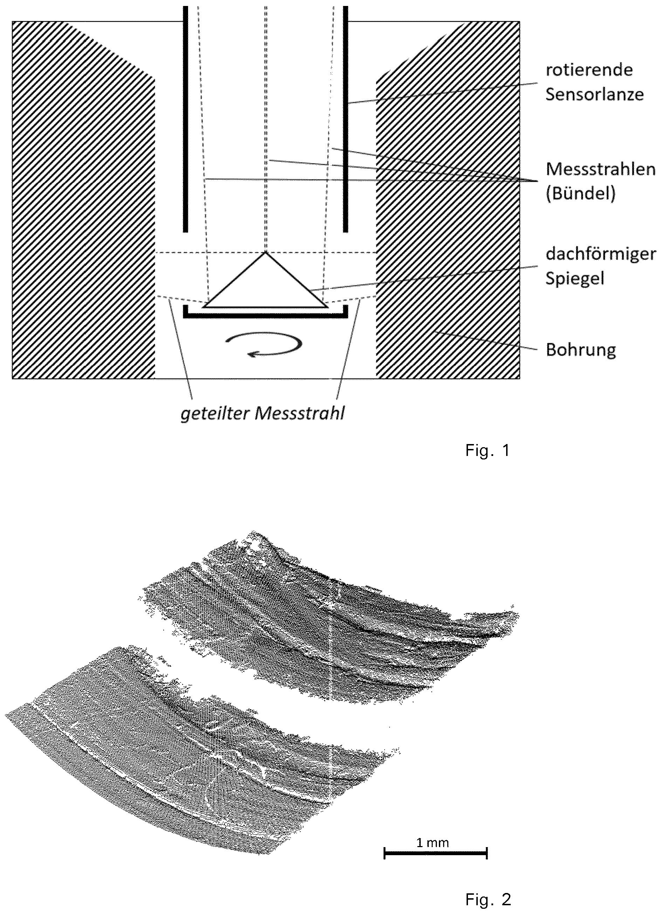

Fig. 1 zeigt einen Querschnitt durch eine Lanze in einer Bohrung mit Senkung. Die Lanze ist als am Ende verschlossenes Rundrohr mit zwei diametral gegenüberliegenden Austrittsöffnungen ausgeführt. Im Bereich der Austrittsöffnungen ist auf dem Boden der Lanze ein im Querschnitt dreieckiger Glaskörper angeordnet, der auf seinen satteldachförmigen Flächen spiegelnd beschichtet ist. Er bildet einen Strahlteiler. Gestrichelt angedeutet ist auch ein durch die Lanze fallender Lichtstrahl, der durch den Strahlteiler geteilt und umgelenkt wird. Um diese Teilung auch im von oben durch die Lanze fallenden Lichtstrahl zu verdeutlichen wurden hier ebenfalls zwei gestrichelte Linien vorgesehen. Die umgelenkten Lichtstrahlteile beleuchten jeweils einen Bereich der Wandung. Wird nun nach der Aufnahme des Bereichs die Lanze etwas rotiert und eine neue Aufnahme gefertigt, lässt sich durch entsprechende Wiederholungen des Vorgangs ein sich über den gesamten Umfang der Bohrung erstreckende Abbildung erzielen, die durch entsprechend überlappende Bereiche gewonnen werden kann. Zudem kann dann auch die Lanze weiter ins Loch vorgeschoben oder aus diesem ein Stückweit herausgezogen werden, und ein weiteres, bevorzugt überlappendes Segment durch mehrere Aufnahmen und zwischenzeitliches Rotieren gewonnen werden.

Fig. 2 zeigt die Abbildung zweier zeitgleich abgebildeter Bereiche der Bohrung aus Fig. 1. Ihre Anordnung entspricht nicht der Anordnung in der Bohrung. Diese kann aber rekonstruiert werden. Dargestellt sind sie sozusagen aufgeklappt nebeneinander.

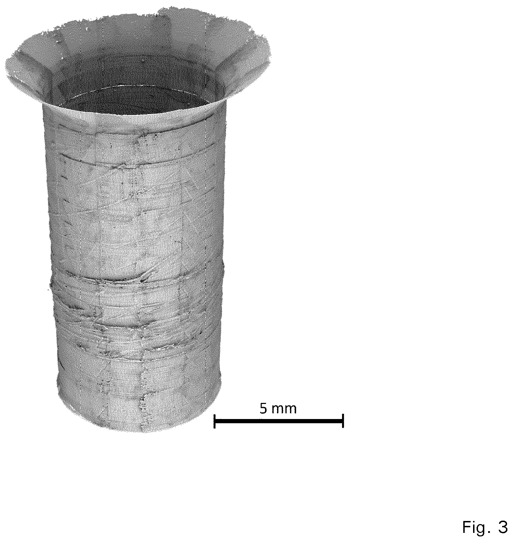

Eine entsprechende Rekonstruktion auf Basis einer Vielzahl überlappender Bereiche ist in Figur 3 gezeigt. Dabei wurde die Bohrung "von außen", sozusagen aus dem Werkstück heraus sowie von oben dargestellt wurde. Zur Darstellung wurde die gewonnene Punktewolke dargestellt. Man sieht sozusagen die Grenzschicht zwischen Werkstück und Bohrung dargestellt. Es lassen sich teilweise spiralförmige Vertiefungen in der Wandung der Bohrung erkennen, die beispielsweise durch eine Bohrung mit einem drehenden und vorschiebenden Bohrer entstehen können.

## Patentansprüche

1. Verfahren zur Untersuchung und/oder Vermessung mindestens eines Wandabschnitts einer in einem Werkstück eingebrachten Vertiefung, insbesondere Senkung und/oder Bohrung, mittels eines optischen Messverfahrens, wobei mindestens ein Lichtstrahl entlang einer ersten Achse in die Vertiefung eingebracht wird und wobei mittels des mindestens einen Lichtstrahls die Geometrie und/oder Reflexivität des mindestens einen Wandabschnitts vermessen wird,
wobei der mindestens eine Lichtstrahl in der Vertiefung so umgelenkt wird, dass jeweils zeitgleich mindestens zwei, in der Vertiefung diametral gegenüberliegende Bereiche des mindestens einen Wandabschnitts beleuchtet werden und dass durch die mindestens zwei Bereiche jeweils reflektiertes Licht entlang der ersten Achse aus der Vertiefung heraus geleitet und außerhalb der Vertiefung zur Bestimmung der Geometrie und/oder Reflexivität des mindestens einen Wandabschnitts verwendet wird, **dadurch gekennzeichnet, dass** die jeweils zeitgleich beleuchteten Bereiche des mindestens einen Wandabschnitts untereinander disjunkt sind, und in jedem Bereich für mindestens 1000 Pixel, insbesondere zeitgleich, mindestens ein Entfernungswert und/oder mindestens ein Intensitäts- und/oder Reflexivitätswert erfasst wird, wobei die Pixel eine 2- oder 3-dimensionale Anordnung aufweisen.

2. Verfahren nach Anspruch 1, wobei die Bereiche je eine Fläche im Bereich von mindestens 2 mm² und/oder bis maximal 50 mm², insbesondere im Bereich von 3 bis 10 mm² aufweisen.

3. Verfahren nach einem der vorstehenden Ansprüche, wobei die jeweils gelichzeitig beleuchteten Bereiche jeweils eine gemeinsame Ebene senkrecht zur ersten Achse schneiden, insbesondere die selben Ebenen senkrecht zur ersten Achse schneiden.

4. Verfahren nach einem der vorstehenden Ansprüche, wobei der mindestens eine Wandabschnitt eine Größe im Bereich von mindestens 25 mm² und/oder maximal 100 cm² aufweist.

5. Verfahren nach einem der vorstehenden Ansprüche, wobei die Vertiefung eine Größe und/oder Durchmesser im Bereich von 4 bis 25 mm aufweist und/oder die Vertiefung und/oder der mindestens eine Wandabschnitt eine Tiefe im Bereich von mindestens 2 mm und/oder maximal 1m aufweist.

6. Verfahren nach einem der vorstehenden Ansprüche, wobei das Verfahren so durchgeführt wird, dass pro Bereich mindestens 1000 Pixel zeitgleich und/oder maximal 50000 Pixel, insbesondere zeitgleich, erfasst werden, wobei die Pixel über den Bereich oder seine Projektion auf eine Ebene, in der die erste Achse liegt, gleichmäßig verteilt sind.

7. Verfahren nach einem der vorstehenden Ansprüche, wobei aus der Reflexivität eine Materialart, -rauigkeit und/oder -farbe abgeleitet und/oder auf Basis von unterschiedlichen Reflexivitätswerten mindestens ein Materialart- und/oder -farbunterschied und/oder mindestens eine -grenze erkannt wird.

8. Verfahren nach einem der vorstehenden Ansprüche, wobei die Vermessung für eine Vielzahl, insbesondere überlappender, Bereiche durchgeführt wird.

9. Verfahren nach Anspruch 8, wobei, insbesondere alle aneinander angrenzenden, Bereiche überlappen, insbesondere um mindestens 20 Pixel, insbesondere an jede Kante zu einem angrenzenden Bereich hin, und wobei die Reflexivitätsabbildungen der überlappenden Bereich zu einer zusammenhängenden Reflexivitätsabbildung zusammen gesetzt werden und/oder die Geometrien der überlappenden Bereich zu einer zusammenhängenden Geometrie zusammen gesetzt werden.

10. Verfahren nach einem der vorstehenden Ansprüche, wobei die Bereiche in einer Ebene senkrecht zur ersten Achse so angeordnet sind, dass mindestens eine Verbindungslinie von einem ersten zu einem zweiten der mindestens zwei Bereich durch die erste Achse verläuft.

11. Verfahren nach Anspruch 10, wobei der Strahlteiler entlang der Achse verfahren und/oder um die Achse rotiert wird und dadurch unterschiedliche Bereiche in der Vertiefung durch den mindestens einen Lichtstrahl beleuchtet werden.

12. Verfahren nach einem der vorstehenden Ansprüche, wobei basierend auf der bestimmten Geometrie des mindestens einen Wandabschnitts eine Zentrierung der ersten Achse in der Vertiefung bewirkt wird, insbesondere mittels einer Verfahrvorrichtung zur Verfahrung der ersten Achse in einer Ebene senkrecht zur ersten Achse.

13. Vorrichtung zur Untersuchung und/oder Vermessung mindestens eines Wandabschnitts einer in einem Werkstück eingebrachten Vertiefung, insbesondere Senkung und/oder Bohrung, mittels eines optischen Messverfahrens, wobei die Vorrichtung eingerichtet ist, mindestens einen Lichtstrahl durch eine Lanze, insbesondere von einem ersten Abschnitts der Lanze aus und/oder entlang der Längserstreckung der Lanze, in die Vertiefung einzubringen, und wobei die Vorrichtung eingerichtet ist, mittels des mindestens eines Lichtstrahl die Geometrie und/oder Reflexivität des mindestens einen Wandabschnitts zu vermessen, wobei die Vorrichtung eingerichtet ist, die Lanze um die Längserstreckung der Lanze zu rotieren und/oder die Lanze entlang der Längserstreckung der Lanze zu verfahren,
wobei, die Lanze, insbesondere beabstandet vom ersten Abschnitt, mindestens einen Strahlteiler aufweist, der angeordnet und eingerichtet ist, den mindestens einen Lichtstrahl so umzulenken, dass er in einer Mehrzahl benachbarter und zur Längserstreckung der Lanze senkrechter Ebenen an mindestens zwei voneinander beabstandeten, diametral gegenüberliegenden Umfangsbereichen der Lanze, insbesondere radial, aus der Lanze austritt und dass die Vorrichtung eingerichtet ist, jeweils an den mindestens zwei Bereichen ausgetretenes und zurück reflektiertes Licht durch die Lanze, insbesondere zum ersten Abschnitt und/oder entlang der Längserstreckung der Lanze, und aus der Lanze heraus zu leiten und außerhalb der Lanze zur Bestimmung der Geometrie und/oder Reflexivität des mindestens einen Wandabschnitts zu verwenden, **dadurch gekennzeichnet, dass** die jeweils zeitgleich beleuchteten Bereiche des mindestens einen Wandabschnitts untereinander disjunkt sind, und die Vorrichtung eingerichtet ist, über jeden der mindestens zwei Umfangsbereiche für mindestens 1000 Pixel je mindestens einen Entfernungswert und/oder mindestens einen Intensitäts- und/oder Reflexivitätswert, insbesondere zeitgleich, zu erfassen, wobei die Pixel eine 2- oder 3-dimensionale Anordnung aufweisen.

## Claims

1. A method for inspecting and/or measuring at least one wall section of a recess formed in a workpiece, in particular a recess and/or bore, by means of an optical measuring method, wherein at least one light beam is introduced into the recess along a first axis and wherein the geometry and/or reflectivity of said at least one wall section is measured by means of said at least one light beam, wherein said at least one light beam is deflected within the recess such that, at any given time, at least two are illuminated simultaneously, and such that light reflected by each of said at least two areas is guided out of the recess along the first axis and used outside the recess to determine the geometry and/or reflectivity of said at least one wall section, **characterised in that** the areas of said at least one wall section illuminated simultaneously are mutually disjoint, and in each area, for at least 1000 pixels, in particular simultaneously, at least one distance value and/or at least one intensity and/or reflectivity value is recorded, wherein the pixels have a 2- or 3-dimensional arrangement.

2. A method according to claim 1, wherein the areas each have an area in the range of at least 2 mm² and/or up to a maximum of 50 mm², in particular in the range of 3 to 10 mm².

3. A method according to one of the preceding claims, wherein the respective simultaneously illuminated areas each intersect a common plane perpendicular to the first axis, in particular intersect the same planes perpendicular to the first axis.

4. A method according to one of the preceding claims, wherein said at least one wall section has a size in the range of at least 25 mm²and/or a maximum of 100 cm².

5. A method according to one of the preceding claims, wherein the recess has a size and/or diameter in the range of 4 to 25 mm and/or the recess and/or said at least one wall section has a depth in the range of at least 2 mm and/or a maximum of 1 m.

6. A method according to one of the preceding claims, wherein the method is carried out such that, per area, at least 1000 pixels are recorded simultaneously and/or a maximum of 50,000 pixels, in particular simultaneously, wherein the pixels are uniformly distributed across the area or its projection onto a plane in which the first axis lies.

7. A method according to one of the preceding claims, wherein a material type, roughness and/or colour is derived from the reflectivity and/or, on the basis of different reflectivity values, at least one material type and/or colour difference and/or at least one boundary is detected.

8. A method according to one of the preceding claims, wherein the measurement is carried out for a plurality of, in particular overlapping, areas.

9. A method according to claim 8, wherein, in particular, all adjacent areas overlap, in particular by at least 20 pixels, in particular at each edge towards an adjacent area, and wherein the reflectivity images of the overlapping areas are combined to form a continuous reflectivity image and/or the geometries of the overlapping areas are combined to form a continuous geometry.

10. A method according to any one of the preceding claims, wherein the regions are arranged in a plane perpendicular to the first axis such that at least one line connecting a first to a second of said at least two regions passes through the first axis.

11. A method according to claim 10, wherein the beam splitter is moved along the axis and/or rotated about the axis, thereby illuminating different regions in the recess with said at least one light beam.

12. A method according to any one of the preceding claims, wherein, based on the determined geometry of said at least one wall section, the first axis is centred in the recess, in particular by means of a movement device for moving the first axis in a plane perpendicular to the first axis.

13. Apparatus for inspecting and/or measuring at least one wall section of a recess, in particular a countersink and/or bore, formed in a workpiece, by means of an optical measuring method, wherein the apparatus is configured to introduce at least one light beam into the recess via a lance, in particular from a first section of the lance and/or along the longitudinal extent of the lance, and wherein the device is configured to measure the geometry and/or reflectivity of said at least one wall section by means of said at least one light beam, wherein the device is configured to rotate the lance about the longitudinal extent of the lance and/or to move the lance along the longitudinal extent of the lance,
wherein the lance, in particular spaced apart from the first section, comprises at least one beam splitter which is arranged and configured to deflect said at least one light beam such that it emerges from the lance in a plurality of adjacent planes perpendicular to the longitudinal axis of the lance, at at least two spaced-apart, diametrically opposite circumferential regions of the lance, in particular radially, from the lance, and that the device is arranged to guide light emitted from and reflected back at each of said at least two regions through the lance, in particular towards the first section and/or along the longitudinal extent of the lance, and out of the lance, and to use it outside the lance to determine the geometry and/or reflectivity of said at least one wall section, **characterised in that** the respective simultaneously illuminated areas of said at least one wall section are mutually disjoint, and the device is configured to detect, via each of said at least two peripheral areas, at least one distance value and/or at least one intensity and/or reflectivity value for at least 1000 pixels, in particular simultaneously, wherein the pixels have a 2- or 3-dimensional arrangement.

## Revendications

1. Procédé d'inspection et/ou de mesure d'au moins une section de paroi d'un évidement formé dans une pièce, en particulier un évidement et/ou un alésage, au moyen d'un procédé de mesure optique, dans lequel au moins un faisceau lumineux est introduit dans l'évidement le long d'un premier axe et dans lequel la géométrie et/ou la réflectivité de ladite au moins une section de paroi est mesurée au moyen dudit au moins un faisceau lumineux, dans lequel ledit au moins un faisceau lumineux est dévié à l'intérieur de l'évidement de telle sorte que, à tout moment donné, au moins deux zones soient éclairées simultanément, et de telle sorte que la lumière réfléchie par chacune desdites au moins deux zones soit guidée hors de l'évidement le long du premier axe et utilisée à l'extérieur de l'évidement pour déterminer la géométrie et/ou la réflectivité de ladite au moins une section de paroi, **caractérisée en ce que** les zones de ladite au moins une section de paroi éclairées simultanément sont mutuellement disjointes, et dans chaque zone, pour au moins 1 000 pixels, en particulier simultanément, au moins une valeur de distance et/ou au moins une valeur d'intensité et/ou de réflectivité est enregistrée, les pixels présentant une disposition en deux ou trois dimensions.

2. Procédé selon la revendication 1, dans lequel les zones ont chacune une superficie comprise entre au moins 2 mm² et/ou jusqu'à un maximum de 50 mm², en particulier comprise entre 3 et 10 mm².

3. Procédé selon l'une des revendications précédentes, dans lequel les zones respectives éclairées simultanément coupent chacune un plan commun perpendiculaire au premier axe, en particulier coupent les mêmes plans perpendiculaires au premier axe.

4. Procédé selon l'une des revendications précédentes, dans lequel ladite au moins une section de paroi a une taille comprise entre au moins 25 mm² et/ou un maximum de 100 cm².

5. Procédé selon l'une des revendications précédentes, dans lequel l'évidement a une taille et/ou un diamètre compris entre 4 et 25 mm et/ou l'évidement et/ou ladite au moins une section de paroi a une profondeur comprise entre au moins 2 mm et/ou un maximum de 1 m.

6. Procédé selon l'une des revendications précédentes, dans lequel le procédé est mis en œuvre de telle sorte que, par zone, au moins 1000 pixels soient enregistrés simultanément et/ou un maximum de 50 000 pixels, en particulier simultanément, les pixels étant répartis uniformément sur la zone ou sa projection sur un plan dans lequel se trouve le premier axe.

7. Procédé selon l'une des revendications précédentes, dans lequel un type de matériau, une rugosité et/ou une couleur sont déduits de la réflectivité et/ou, sur la base de différentes valeurs de réflectivité, au moins un type de matériau et/ou une différence de couleur et/ou au moins une limite sont détectés.

8. Procédé selon l'une des revendications précédentes, dans lequel la mesure est effectuée pour une pluralité de zones, en particulier se chevauchant.

9. Procédé selon la revendication 8, dans lequel, en particulier, toutes les zones adjacentes se chevauchent, en particulier d'au moins 20 pixels, en particulier au niveau de chaque bord vers une zone adjacente, et dans lequel les images de réflectivité des zones qui se chevauchent sont combinées pour former une image de réflectivité continue et/ou les géométries des zones qui se chevauchent sont combinées pour former une géométrie continue.

10. Procédé selon l'une quelconque des revendications précédentes, dans lequel les régions sont disposées dans un plan perpendiculaire au premier axe de telle sorte qu'au moins une ligne reliant une première à une deuxième desdites au moins deux régions passe par le premier axe.

11. Procédé selon la revendication 10, dans lequel le séparateur de faisceau est déplacé le long de l'axe et/ou mis en rotation autour de l'axe, éclairant ainsi différentes régions dans l'évidement avec ledit au moins un faisceau lumineux.

12. Procédé selon l'une quelconque des revendications précédentes, dans lequel, sur la base de la géométrie déterminée de ladite au moins une section de paroi, le premier axe est centré dans l'évidement, en particulier au moyen d'un dispositif de déplacement destiné à déplacer le premier axe dans un plan perpendiculaire au premier axe.

13. Dispositif pour inspecter et/ou mesurer au moins une section de paroi d'un évidement, en particulier d'un lamage et/ou d'un alésage, formé dans une pièce à usiner, au moyen d'un procédé de mesure optique, dans lequel le dispositif est configuré pour introduire au moins un faisceau lumineux dans l'évidement via une lance, en particulier à partir d'une première section de la lance et/ou le long de l'étendue longitudinale de la lance, et dans lequel le dispositif est configuré pour mesurer la géométrie et/ou la réflectivité de ladite au moins une section de paroi au moyen dudit au moins un faisceau lumineux, dans lequel le dispositif est configuré pour faire tourner la lance autour d' e l'étendue longitudinale de la lance et/ou pour déplacer la lance le long de l'étendue longitudinale de la lance,
dans lequel la lance, en particulier à distance de la première section, comprend au moins un séparateur de faisceau qui est agencé et configuré pour dévier ledit au moins un faisceau lumineux de telle sorte qu'il émerge de la lance dans une pluralité de plans adjacents perpendiculaires à l'axe longitudinal de la lance, au niveau d'au moins deux régions circonférentielles espacées, régions circonférentielles diamétralement opposées de la lance, en particulier radialement, à partir de la lance, et en ce que le dispositif est agencé pour guider la lumière émise depuis et réfléchie vers chacune desdites au moins deux régions à travers la lance, en particulier vers la première section et/ou le long de l'étendue longitudinale de la lance, et hors de la lance, et pour l'utiliser à l'extérieur de la lance afin de déterminer la géométrie et/ou la réflectivité de ladite au moins une section de paroi, **caractérisé en ce que** les zones respectives simultanément éclairées de ladite au moins une section de paroi sont mutuellement disjointes, et le dispositif est configuré pour détecter, via chacune desdites au moins deux zones périphériques, au moins une valeur de distance et/ou au moins une valeur d'intensité et/ou de réflectivité pour au moins 1000 pixels, en particulier simultanément, les pixels présentant un agencement en 2 ou 3 dimensions.
